# EUROPEAN PATENT APPLICATION

(11) **EP 3 021 468 A1**
(43) Date of publication of application: **18.05.2016**
(21) Application number: 14193147.7
(22) Date of filing: 14.11.2014
(51) Int. Cl.: H02K 21/44, H02K 7/18

(54) **A stator for a generator and a flux switching machine for a wind turbine**

(71) Applicant: Areva Wind GmbH, 27572 Bremerhaven (DE)
(72) Inventor: NEDJAR, Boumedyen, 94000 Créteil (FR)
(74) Representative: Prinz & Partner mbB

(57) **Abstract**

A stator (16) for a generator (10) of a wind turbine is provided, the stator (16) comprising a magnetic frame (18), magnets (36) and magnetic sections (28) spaced from each other. The magnets (36) are used to fasten the magnetic sections (28) to the frame (18). Further, a flux switching machine (10) for a wind turbine, in particular a generator for a wind turbine, is provided, the flux switching machine (10) comprising a rotor (12) and a stator (16).

## Description

### FIELD OF THE INVENTION

The invention relates to a stator for a generator of a wind turbine. Furthermore, the invention relates to a flux switching machine for a wind turbine.

### BACKGROUND

Typically, a generator of a wind turbine comprises a stationary stator and a moving rotor. The stationary stator comprises several spaced sections which are used for carrying windings.

Accordingly, the sections are substantially C-shaped such that each section comprises a base and two arms. One of the both arms of one section and the adjacent arm of a neighbored section carry one common winding. The sections are further circumferentially arranged in order to surround the rotating rotor.

Further, the neighbored sections are fixed to each other by permanent magnets which are sandwiched between these sections. Hence, the sections are made of a magnetic material. The adjacent arms of neighbored sections both abut the sandwiched permanent magnet from different sides.

However, the permanent magnets and the sections have to be maintained in its position as they could move radial outwardly. Therefore, an outer rim is provided which contacts the base of each section and the permanent magnets sandwiched between neighbored sections.

It has turned out that a leakage flux occurs due to the rim surrounding and contacting all sections which has a negative impact on the efficiency of the generator.

Hence, it is an object of the invention to provide a simple solution for increasing the efficiency of the generator by reducing the leakage flux and facilitate the assembly of such machine.

### SUMMARY

A stator for a generator of a wind turbine is provided that comprises a ferromagnetic frame, magnets and magnetic sections spaced from each other. Further, the magnets are used to fasten the magnetic sections to the frame.

The magnetic sections are decoupled from an encircling element like a rim such that a leakage flux is avoided or at least reduced. The sections are in contact with the magnets which in turn are in contact with the frame for maintaining the sections in their positions. An encircling element for maintaining the positions of the magnets and the magnetic sections is not necessary. The frame can be part of the generator structure which may be coupled to a housing of the generator. The magnets could be permanent magnets. Alternatively, the magnets could be electromagnets or solenoids.

Further, each magnetic section can comprise at least a C-shaped contour facing radial inwardly wherein each magnetic section comprises a base and two arms. The term C-shaped refers to a two dimensional cross-sectional representation of the magnetic section, while the magnetic section is of course three dimensional.

Particularly, each magnetic section may be substantially C-shaped such that the arms are formed at the outer edges of the base.

According to an aspect of the invention, the frame can comprise a support ring and fixing bars extending radial inwardly from the support ring. The support ring is the outermost part of the stator, which imparts stiffness to the stator. The fixing bars can be arranged substantially vertically with respect to the support ring. Further, the fixing bars may be tapered radial inwardly. Therefore, the fixing bars can be considered as sharp teeth.

Further, the frame can comprise recesses each formed between two neighbored fixing bars. The recesses can be formed as ring segments when the fixing bars are arranged vertically with respect to the support ring. Further, the sections can be inserted into the gaps in order to achieve a compact design of the stator.

At least one of the magnets can be provided between one of both arms of one magnetic section and one of the fixing bars. Hence, the magnetic sections are indirectly coupled to the fixing bars by the magnets. Due to the tapered fixing bars, it is ensured that the sections maintain their positions as they could not move radial outwardly.

According to another aspect of the invention, a gap can be provided between each magnetic section and the frame which gap particularly can be filled by a material and/or used for cooling. The gap ensures that no direct contact is provided between the magnetic sections and the frame in order to avoid or at least reduce the leakage flux. The magnetic sections are only in contact with the magnets. The gap can be filled by a material such as copper or iron in order to establish a hybrid excited flux switching machine.

Generally, each magnetic section can be provided with at least one magnet on two of its face sides wherein the magnetic section and the at least two magnets form a segment, in particular a preassembled segment. The face sides are opposite to each other. Each segment can be assembled separately, in particular pre-assembled. Afterwards the segments can be inserted into the corresponding gaps such that the magnets provided on both face sides interact with the fixing bars limiting the corresponding gaps to ensure the fixation of the segments. The magnets can be glued to the face sides.

Further, the magnets of one segment can have an opposite magnetic orientation in order to ensure a flux concentration into the air gap.

The magnets of neighbored segments can have the same magnetic orientation. The same magnetic orientation of neighbored segments improves the fixation of the magnetic sections as neighbored magnetic sections share one fixing bar via adjacent arms. The same magnetic orientation ensures that the magnetic field lines run from the magnet of one magnetic section to the magnet of the neighbored section directly. This results in an attracting force between the adjacent magnets. Further, an even number of sections are used in order to ensure that all neighbored sections have the same magnetic orientation.

According to one embodiment of the invention, the magnetic sections can be €-shaped (in terms of the basic cross-sectional geometry the shape is similar or substantially similar to the sign for the currency EURO) such that two central legs and an intermediate slit are provided. The term €-shaped (or EURO-shaped) refers to a two dimensional cross-sectional view of the magnetic section, while the magnetic section is of course three dimensional. This design of the magnetic sections induces flux weakening. Further, the mechanical stiffness as well as the fixation is improved. A €-shape is defined by a typical C-shaped main part wherein two additional parallel arms are provided which at least project into the inner area of the C-shaped main part. The arms are arranged in the area of the center point (which is rather a line if regarded three-dimensionally) of the C-shaped or C-curved main part, in particular such that each arm has the same distance from the middle point (or line if regarded three-dimensionally) of the C-curved main part, but on different sides of that center point (or line if regarded three-dimensionally). The center point is the outermost point of the C-shaped main part. For the letter "C" in exact this representation, the center point would be the most left hand sided point of the shown character. The arms can be arranged perpendicular to the C-shaped main part in its center point.

An additional magnet, in particular a permanent magnet, can be provided within the slit. This additional magnet improves the defined magnetization of the magnetic section.

Further, the additional magnet can have an opposite magnetic orientation with respect to the magnets used to fasten the magnetic section. Therefore, the magnetic orientation is altered two by one wherein the number of magnets having a first magnetic direction is twice with respect to the opposite magnetic orientation.

Generally, the strength of the magnets can be kept almost the same as well as their size.

According to another aspect of the invention, the magnetic sections can be circumferentially spaced. The support ring is the outermost part of the stator from which the fixing bars extend radial inwardly such that radial segmented gaps are formed between adjacent fixing bars. Within these gaps the magnetic sections are inserted during manufacturing such that they are circumferentially spaced by the fixing bars.

Further, at least one winding is provided, in particular at least one concentrated winding between both arms of each magnetic section. The winding is used to generate induced power. A higher specific electromagnetic torque can be achieved by a concentrated winding which means that the weight and the size of the stator can be reduced.

According to an aspect of the invention, the magnetic sections are made of iron or by a lamination stack. These materials ensure the stiffness required and, further, the magnetic sections can be manufactured easily and low priced.

Further, the magnets are spaced from the support ring. The magnets are only in contact with the frame via the fixing bars. According to this, the leakage flux can be reduced.

Moreover, a flux switching machine for a wind turbine, in particular a generator for a wind turbine, is provided which comprises a rotor and a stator as described above. This flux switching machine is easy to assemble and it has a higher efficiency. The advantages of the stator mentioned above can be applied to the flux switching machine as well since such a stator is provided.

The invention also provides a wind turbine comprising a stator and/or a flux switching machine according to the aspects and embodiments of the invention.

### BRIEF DESCRIPTION OF DRAWINGS

Further features and advantages of the invention will become apparent from the following description and from the accompanying drawings to which reference is made. In the drawings:
- Figure 1 a flux switching machine according to the invention,
- Figure 2 a detail of a stator according to the invention having segments according to a first embodiment,
- Figure 3 a perspective view of a segment according to a second embodiment which can be used by a stator according to the invention,
- Figure 4 the segment shown in Figure 3 in an exploded view,
- Figure 5 a perspective view of a detail of a stator according to the invention having segments according to the second embodiment, and
- Figure 6 a schematic view of one segment according to a third embodiment.

### DETAILED DESCRIPTION OF EXAMPLE EMBODIMENTS

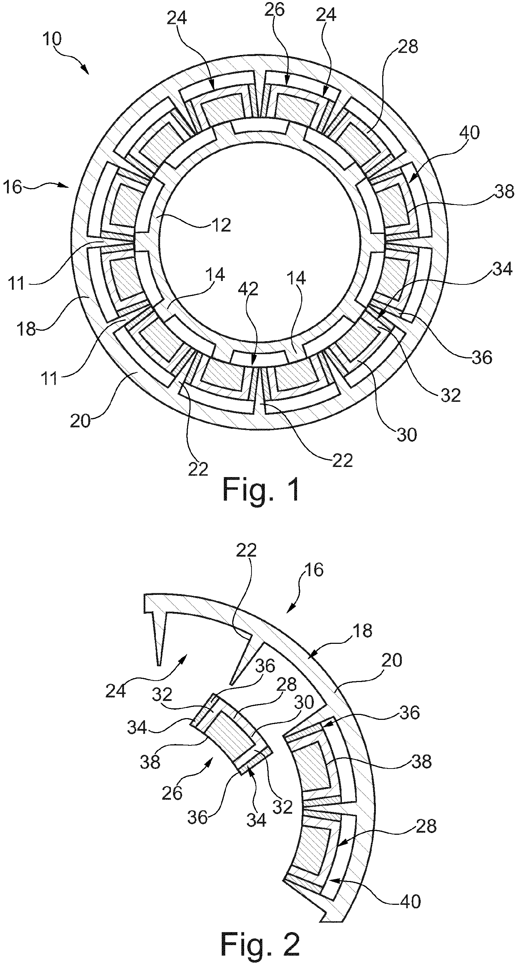

Figure 1 shows a schematic overview of a flux switching machine 10, in particular a generator, for a wind turbine.

The flux switching machine 10 comprises a rotor 12 having rotor teeth 14. The rotor teeth 14 are provided on the outer circumference of the rotor 12.

Further, the flux switching machine 10 comprises a stator 16 which surrounds the rotor 12 such that rotor teeth 14 are facing the stationary stator 16.

The stator 16 comprises a ferromagnetic frame 18 which is formed by an outer support ring 20 and fixing bars 22 extending radial inwardly from the inner surface of the support ring 20. Hence, the fixing bars 22 are orientated to the center of the support ring 20.

The fixing bars 22 are further formed such that they are tapered radial inwardly. Hence, the fixing bars 22 can be considered as sharp teeth.

In general, the support ring 20 and the fixing bars 22 are formed integrally.

Between adjacent fixing bars 22 recesses 24 are provided which are formed like ring segments (please see Figure 2). These recesses 24 are used for receiving segments 26 wherein each recess 24 receives one segment 26.

In this embodiment, each segment 26 is formed by a substantially C-shaped magnetic section 28 which has a base 30 and two arms 32 protruding substantially vertical from the base 30 in a radial inward direction. The arms 32 are arranged at the outer edges of the base 30 such that they form a C-shaped contour. The term C-shaped refers to a cross-sectional view (two dimensional) of the magnetic section, while the magnetic section 28 is of course three dimensional.

The arms 32 have two face sides 34 facing in circumferential direction wherein each face side 34 is provided with a magnet 36 such that the magnetic section 28 is surrounded laterally by two magnets 36. The magnets 36 can be glued to the face sides 34. In this embodiment, the magnets 36 are formed as permanent magnets.

The magnetic sections 28 can be made of iron or a lamination stack.

Further, each segment 26 provides a winding 38. The windings 38 are formed as concentrated windings which are inserted between the inner sides of the arms 32 such that a compact design of the segments 26 is achieved.

Each segment 26 is inserted into one recess 24 of the frame 18 such that the permanent magnets 36 each abut a corresponding fixing bar 22. Due to the shape of the fixing bars 22, a radial stop for the segments 26 is provided ensuring that the position of the segments 26 are maintained, in particular the position of the magnetic sections 28, the permanent magnets 36 and the windings 38.

Since the frame 18 is made of a magnetic material, the permanent magnets 36 interact with the frame 18, in particular the fixing bars 22, as well as with the magnetic sections 28. Hence, the magnetic sections 28 are fixed to the frame 18 by the permanent magnets 36.

Therefore, the permanent magnets 36 of one magnetic section 28 are oriented such that they have an opposite magnetic orientation wherein adjacent permanent magnets 36 of neighbored segments 26 have the same magnetic orientation. This ensures a better fixation as adjacent permanent magnets 36 of neighbored sections 28 interact with each other establishing an attracting force between them.

This is illustrated by arrows M in Figure 1 which represent the magnetic flux direction of the magnets 36 as well as the flux concentration (dashed arrow) of a magnetic section 28.

Further, a gap 40 is present between each inserted segment 26 and the support ring 20 as the gap 40 is formed between the base 30 and the support ring 20. These gaps 40 ensure that no direct contact is provided between one of the magnetic sections 28 and the outer support ring 20 encircling the magnetic sections 28.

The permanent magnets 36 can be disposed on the face sides 34 in a full faced manner such that each gap 40 extends between two adjacent fixing bars 22 ensuring that no direct contact is provided between one of the permanent magnets 36 and the support ring 20.

In the embodiment shown in Figure 1, the stator 16 comprises twelve recesses 24 and twelve segments 26 inserted into these recesses 24.

Due to the formation of the recesses 24, the segments 26 and in particular the permanent magnets 36, the magnetic sections 28 as well as the windings 38 are all circumferentially disposed. Furthermore, the segments 26 are circumferentially spaced as the fixing bars 22 separate the segments 26 from each other.

As can be seen in Figure 1, the inner circumferential face surface 42 of each segment 26 can have a round shape such that all segments 26 and the fixing bars 22 form a continuous surface which faces radial inwardly to the rotor 12 and its rotor teeth 14.

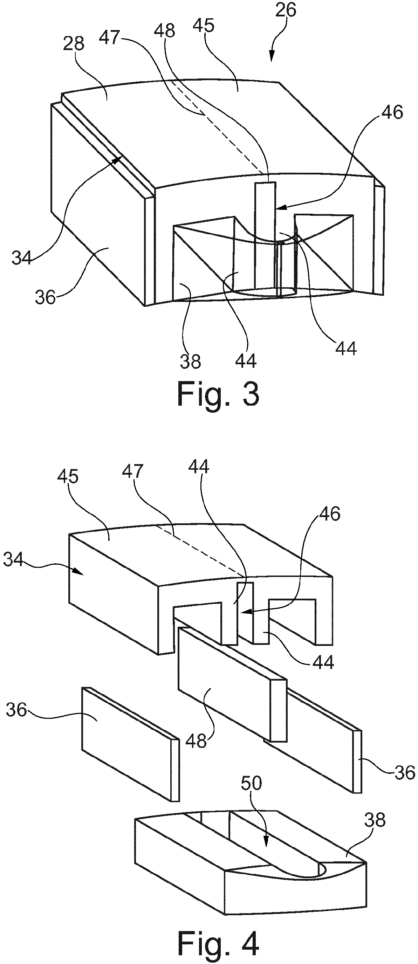

In Figures 3 to 5, a second embodiment of the segment 26 is shown wherein the C-shaped magnetic section 28 is modified. The magnetic section 28 according to the second embodiment has a €-shape as two central legs 44 and an intermediate slit 46 are formed. The term €-shape (or EURO sign-shaped) relates to a cross-sectional view of the magnetic section 28, while the magnetic section 28 is of course three dimensional. The two central legs 44 are oriented parallel and project to the inner area of the €-shaped magnetic section 28 which also comprises a C-shaped main part 45 beside the two central legs 44. Both central legs 44 are arranged at the same distance from a central point 47 (or rather central line 47) of the C-shaped or C-curved main part 45 wherein they are orientated mainly perpendicular to the tangent in the center point 47 of the main part 45. The center point 47 refers to a two dimensional cross-sectional view of the €-shaped magnetic section 28, while 47 is rather a center line from a three dimensional perspective which extends along the body of the magnetic section 28, in particular the main part 45, as illustrated by the dashed line in Figures 3 and 4.

Further, a magnet 48 is inserted into the slit 46 which can have the same magnetic strength as the other permanent magnets 36 disposed on the face sides 34 of the magnetic section 28. The magnet 48 can also be a permanent magnet.

However, the orientation of the magnet 48 can be opposite to the permanent magnets 36 such that the relationship regarding the magnetic orientation is 2:1 since two permanent magnets 36 on the face sides 34 and one magnet 48 having an opposite magnetic orientation are provided.

As shown in Figure 4, the winding 38 has a clearance 50 in its middle portion for receiving the central legs 44 and the magnet 48 when inserted into the magnetic section 28. Hence, a compact design of the segments 26 is provided.

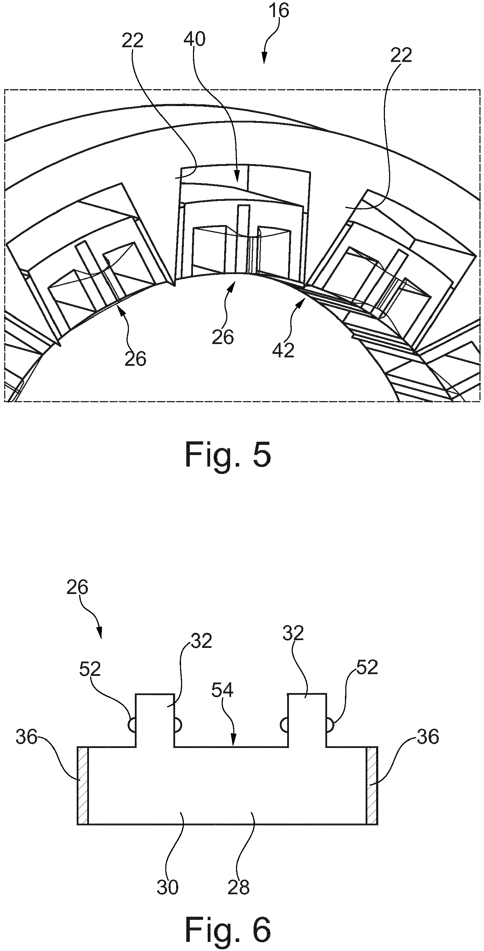

In Figure 5, a perspective view of the stator 16 comprising the segments 26 of the second embodiment is shown.

The radial inwardly tapered fixing bars 22 as well as the circular surface 42 become obvious. Further, the gaps 40 are shown which can be filled by a material such as iron or copper in order to provide a hybrid excitable flux switching machine 10 or for cooling purposes.

As the magnetic sections 28 are fixed to the frame 18 by the permanent magnets 36, no fixing holes are required within the frame 18.

In general, the phase difference of the flux switching machine 10 is managed by the combination of the stator segments 26 and the number of the rotor teeth 14.

A stator 16 as well as a flux switching machine 10 is provided which reduce the leakage flux and, therefore, improve the efficiency.

In Figure 6, a third embodiment of a section 26 is shown which comprises a base 30 and two arms 32 carrying windings 52.

In contrast to the C-shaped sections 26 shown in the previous embodiments, the arms 32 are not provided at the outer edges of the base 30 to which the magnets 36 are attached.

However, this section 26 also has a C-shaped contour 54 which is formed between the arms 32 and the portion of the base 30 located between the arms 32, in particular between the surfaces of the legs 32 facing each other.

The C-shaped contour 54 faces radial inwardly when the section 26 is attached to the frame which is not shown in this Figure.

## Claims

1. A stator for a generator of a wind turbine, the stator comprising a ferromagnetic frame magnets and magnetic sections spaced from each other wherein the magnets are used to fasten the magnetic sections to the frame.

2. A stator according to claim 1, **characterized in that** each magnetic section has at least a C-shaped contour facing radial inwardly and comprises a base and two arms, in particular each magnetic section is substantially C-shaped.

3. A stator according to claim 1 or 2, **characterized in that** the frame comprises a support ring and fixing bars extending radial inwardly from the support ring.

4. A stator according to claim 3, **characterized in that** the frame comprises recesses each formed between two neighbored fixing bars.

5. A stator according to any of the claims 2 to 4, **characterized in that** at least one of the magnets is provided between one of both arms of one magnetic section and one of the fixing bars.

6. A stator according to any of the preceding claims, **characterized in that** a gap is provided between each magnetic section and the frame which gap particularly can be filled by a material and/or used for cooling.

7. A stator according to any of the preceding claims, **characterized in that** each magnetic section is provided with at least one magnet on two of its face sides wherein the magnetic section and the at least two magnets form a segment, in particular a preassembled segment.

8. A stator according to claim 7, **characterized in that** the magnets of one segment have an opposite magnetic orientation.

9. A stator according to claim 7 or 8, **characterized in that** the magnets of neighbored segments have the same magnetic orientation.

10. A stator according to any of the preceding claims, characterized that the magnetic sections are €-shaped such that two central legs and an intermediate slit are provided.

11. A stator according to claim 10, **characterized in that** an additional magnet, in particular a permanent magnet, is provided within the slit.

12. A stator according to claim 11, **characterized in that** the additional magnet has an opposite magnetic orientation with respect to the magnets used to fasten the magnetic section.

13. A stator according to any of the preceding claims, **characterized in that** the magnetic sections are circumferentially spaced.

14. A stator according to any of the preceding claims, **characterized in that** at least one winding is provided, in particular at least one concentrated winding between both arms of each magnetic section and/or that the magnetic sections are made of iron or by a lamination stack.

15. A flux switching machine for a wind turbine, in particular a generator for a wind turbine, comprising a rotor and a stator according to any of the preceding claims.
